# EUROPÄISCHE PATENTSCHRIFT

(11) **EP 1 231 335 B1**
(45) Veröffentlichungstag und Bekanntmachung des Hinweises auf die Patenterteilung: **03.01.2007**
(21) Anmeldenummer: 02002793.4
(22) Anmeldetag: 07.02.2002
(51) Int. Cl.: E04F 15/18

(54) **Verpackungseinheit aus Parkettbahnen oder Laminatplatten mit einer gefalteten Dämmbahn**
Packaging unit consisting of parquet boards or laminated panels and with a folded insulating web
Ensemble de conditionnement consistant de panneaux de parquet ou panneaux laminés et avec une bande isolante pliée

(30) Priorität: 07.02.2001 DE 20102087 U
(43) Veröffentlichungstag der Anmeldung: 14.08.2002
(73) Patentinhaber: Alveo AG, 6002 Luzern (CH)
(72) Erfinder: Scholbe, Ulrich, 6005 Luzern (CH)
(74) Vertreter: Strehl Schübel-Hopf & Partner

(56) Entgegenhaltungen:
- EP-A- 0 627 299
- EP-A- 0 893 243
- DE-A- 3 524 574
- DE-A- 3 924 316
- DE-A1- 3 403 386
- DE-A1- 19 637 142
- FR-A1- 2 436 224
- FR-A1- 2 775 013
- GB-A- 1 088 593
- GB-A- 2 287 189
- US-A- 4 712 349
- Firmenveröffentlichung Alveo: Alveolit Parkettunterlage (Renovation und Neubau), Rev 1, 1995
- Firmenveröffentlichung Alveo: Alveolit Parkettunterlage (Trittschalldämmung - Schwimmender Estrich), Rev 1, 1995

## Beschreibung

Die Erfindung betrifft eine Dämmbahn, die als Unterlage für Fußböden, wie Parkett- und Parkettlaminatböden geeignet ist.
Es ist bekannt, dass derartige Dämmbahnen, die als Unterlage von Parkett- und Parkettlaminatböden verwendet werden, in Rollenform auf einen Kern gewickelt geliefert und transportiert werden. Das Transportvolumen ist dadurch beträchtlich und die Handlichkeit ist beschränkt. Darüber hinaus ist es erforderlich, einen Kern vorzusehen, der später entsorgt werden muß.

Eine derartige Dämmbahn ist z.B. aus DE 3403386 A1 bekannt, die aus einem thermoplastischen Schaumstoff besteht.

GB 1088493 A beschreibt ein mit Falzen versehenes mehrlagiges Verbundmaterial mit einer spezifisch definierten Schicht sowie einer Schaumelastomerzusammensetzung, wobei als Schaumelastomer natürlicher Kautschuk, Synthesekautschuk, Polyurethan und Polyvinylchlorid offenbart sind.

EP 0893 243 A2 offenbart ein mit Falzen versehenes Verbundsystem aus einer starren Materialschicht und einer flexibleren Materialschicht, die miteinander verbunden sind. Als Material für die starre Schicht ist Polystyrol erwähnt.

DE 3403386 A1 ein mit Falzen versehenes Verbundsystem, wobei mindestens eine Lage aus Polystyrolschaum gebildet ist.

DE 35 24 574 A1 offenbart eine einlagige Dämmbahn aus einem Polyethylenschaumstoff mit über die ganze Breite verlaufenden Faltstreifen, die zusammengefaltet sein kann.

Die vorliegende Erfindung beseitigt die oben genannten Probleme dadurch, dass sie die Möglichkeit schafft, eine solche Dämmbahn flachzulegen.

Gegenstand der Erfindung ist somit eine Verpackungseinheit aus Parkettbahnen oder Laminatplatten, mit einer einlagigen Dämmbahn, gemäß Anspruch 1.
Gegenstand der Erfindung ist außerdem eine Verpackungseinheit gemäß Unteranspruch 2.

Die beigefügte Zeichnung verdeutlicht den Erfindungsgegenstand.

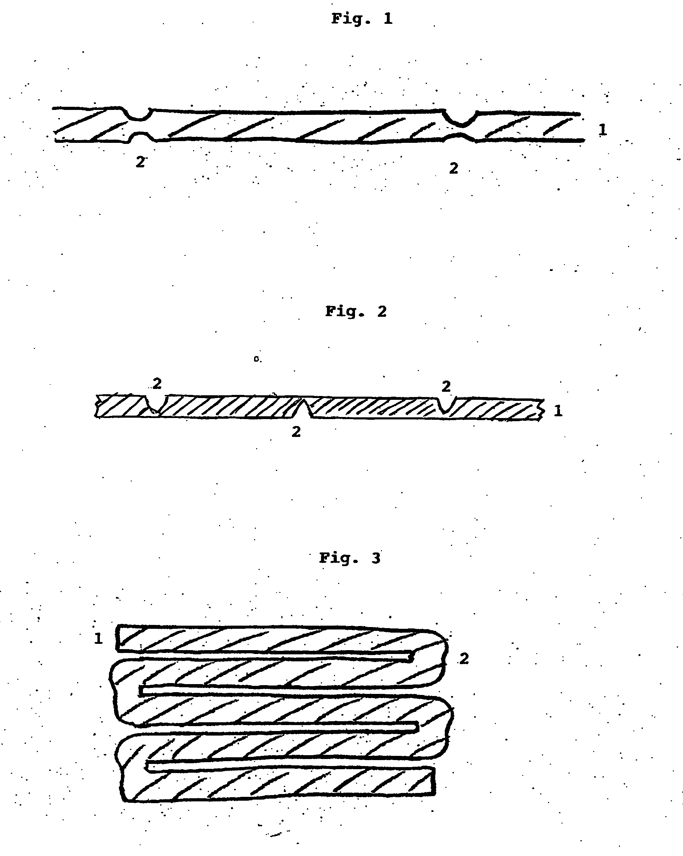

Darin zeigt Fig. 1 einen Schnitt in Richtung der Länge einer Dämmbahn 1, welche mit Falzen 2 in Form von Einkerbungen versehen ist.

Fig. 2 zeigt einen Schnitt in Richtung der Länge einer Dämmbahn 1, welche mit tiefen Falzen 2 versehen ist, die abwechselnd von beiden Oberflächen der Dämmbahn her eingekerbt sind.

Fig. 3 zeigt eine Länge einer solchen Dämmbahn 1, die an der Stelle der Falze bzw. Einkerbungen 2 abgebogen und zu einem flachen Paket zusammengelegt ist.

Die Dämmbahn 1 besteht aus einem thermoplastischen Schaumstoff.

Der thermoplastische Schaumstoffe ist ein Polyethylen, Ethylen-Copolymer, Polypropylen oder Propylen-Copolymer.

Die Falze verlaufen über die gesamte Breite der Dämmbahn, um eine glatte Faltung der Dämmbahn für den Transport und die Handhabung zu gewährleisten.
Die Falze können, wie in Fig. 1 gezeigt ist, beidseitig ausgebildet sein.
Es ist aber auch möglich, gemäß der in Fig. 2 gezeigten Ausführungsform, die Falze so anzuordnen, dass sie jeweils nur auf einer Seite der Dämmbahn ausgebildet sind, so dass sich Falze auf einer Seite mit Falzen auf der gegenüberliegenden Seite der Dämmbahn abwechseln.
Der Falz 2 kann jede beliebige Form haben, wie beispielsweise eine eingepresste Vertiefung, eine halbkreisförmige Ausbildung, die Form einer Kerbe oder eines Einschnitts.
Die Ausbildung des Falzes kann durch mechanische Bearbeitung, wie Pressen, Einschneiden, Einkerben oder durch thermische Formung, wie Heißpressen oder Prägen oder mittels einer Schweißpresse (beispielsweise durch Ultraschall, Vibrationsschweißen oder ähnliche Bearbeitungen) ausgebildet werden.

Die Dämmbahn eignet sich als Unterlage für Parkettböden oder Parkettlaminatböden. Sie läßt sich an den vorgesehenen Falzen 2 falten und kann daher in Form eines flachgelegten Pakets transportiert und in einfacher Weise gehandhabt werden.

Die gefalzte, flachgelegte Unterlagsbahn ermöglicht eine Verminderung des Transportvolumens auf ein Minimum. So beträgt das Volumen einer 3 mm starken, 1 m breiten, 10 m langen Dämmbahnrolle (typischer Wickeldurchmesser 10 cm) ca. 38 dm³, während das Volumen der entsprechenden flachgelegten gefalteten Dämmbahn nur etwa 30 dm³ beträgt.

Des weiteren ist die Faltung der Dämmbahn so durchgeführt, dass sie exakt auf die Abmessungen einer Laminatplatte oder Parkettbahn abgestimmt ist, und die Gesamtfläche der Dämmbahn genau der Verlegefläche einer Verpackungseinheit aus Parkettbahnen oder Laminatplatten entspricht. Gemäß der Erfindung wird diese gefaltete Dämmbahn der Verpackungseinheit aus Parkettbahnen oder Laminatplatten direkt beigelegt, so dass ein Verleger Dämmbahn und Parkett in richtiger Menge erhält und dies bei optimalem Transportvolumen und einfacher Handhabung. Zusätzlich erübrigt sich die Entsorgung des Wickelkerns.

## Patentansprüche

1. Verpackungseinheit aus Parkettbahnen oder Laminatplatten, mit einer gefalteten Dämmbahn (1) bestehend aus einem thermoplastischen Schaumstoff, wobei die Dämmbahn in verlegten Zustand über die ganze Breite der Dämmbahn (1) verlaufende Falze (2) aufweist, wobei die Dämmbahn (1) durch Falten an den Falzen (2) zu einem flachgelegten Paket zusammengelegt ist,
wobei
die Dämmbahn (1) einlagig ist und der thermoplastische Schaumstoff ein Polyethylen, Ethylen-Copolymer, Polypropylen oder Propylen-Copolymer ist,
wobei die Abmessungen der Dämmbahn (1) im gefalteten Zustand den Abmessungen der Parkettbahnen oder Laminatplatten entsprechen, und die Gesamtfläche der Dämmbahn (1) im verlegten Zustand der Verlegefläche der Parkettbahnen oder Laminatplatten der Verpackungseinheit entspricht.

2. Verpackungseinheit nach Anspruch 1, **dadurch gekennzeichnet, dass** die Falze (2) der Dämmbahn (1) die Form von eingepressten Vertiefungen, Halbkreisen, Einkerbungen oder Einschnitten haben.

## Claims

1. Packaging unit of parquet panels or laminate panels, with a folded insulation sheet (1) consisting of a thermoplastic foam, wherein the insulation sheet in the laid out state has folds (2) which extend over the whole width of the insulation sheet (1), wherein the insulation sheet (1) is folded to a flat package by folding at the folds (2),
wherein the insulation sheet (1) is single-layered and the thermoplastic foam is a polyethylene, an ethylene copolymer, a polypropylene or a propylene copolymer,
wherein the dimensions of the insulation sheet (1) in the folded state correspond to the dimensions of the parquet panels or laminate panels and the total area of the insulation sheet (1) in the laid out state corresponds to the laid area of the parquet panels or laminate panels of the packaging unit.

2. Packaging unit according to claim 1, **characterized in that** the folds (2) of the insulation sheet (1) have the form of pressed-in depressions, semicircles, notches or incisions.

## Revendications

1. Ensemble de conditionnement consistant en panneaux de parquet ou de panneaux laminés, avec une bande isolante (1) pliée, à base d'une mousse thermoplastique, la bande isolante présentant à l'état posé, des rainures (2) s'étendant sur toute la largeur de la bande isolante (1), la bande isolante (1) étant repliée en un paquet plat par pliage aux rainures (2),
la bande isolante (1) étant monocouche et la mousse thermoplastique étant un polyéthylène, un copolymère d'éthylène, un polypropylène ou un copolymère de propylène,
les dimensions de la bande isolante (1) à l'état plié correspondant aux dimensions des panneaux de parquet ou des panneaux laminés, et la surface totale de la bande isolante (1) à l'état posé, correspondant à la surface de pose des panneaux de parquet ou des panneaux laminés de l'ensemble de conditionnement.

2. Ensemble de conditionnement selon la revendication 1, **caractérisé en ce que** les rainures (2) de la bande isolante (1) peuvent avoir la forme de cavités enfoncées, de demi-cercles, d'encoches ou d'entailles.
